# FASCICULE DE BREVET EUROPEEN

(11) **EP 1 053 913 B1**
(45) Date de publication et mention de la délivrance du brevet: **05.03.2003**
(21) Numéro de dépôt: 00401280.3
(22) Date de dépôt: 10.05.2000
(51) Int. Cl.: B60R 16/02

(54) **Système de contrôle à distance du fonctionnement d'au moins un organe fonctionnel d'un véhicule automobile**
Fernsteuerungsystem zum Betrieb wenigstens eines funktionellen Kraftfahrzeugelements
Remote control system for operating at least one functional vehicle element

(30) Priorité: 18.05.1999 FR 9906306
(43) Date de publication de la demande: 22.11.2000
(73) Titulaire: Peugeot Citroen Automobiles SA, 92200 Neuilly sur Seine (FR)
(72) Inventeur: Gaches, Philippe, 92500 Rueil Malmaison (FR)
(74) Mandataire: Habasque, Etienne Joel Jean-François

(56) Documents cités:
- GB-A- 2 305 262
- US-A- 4 408 293
- US-A- 5 315 295
- US-A- 5 661 651

## Description

La présente invention concerne un système de contrôle à distance du fonctionnement d'au moins un organe fonctionnel d'un véhicule automobile.

L'intégration croissante d'équipements électroniques de plus en plus perfectionnés dans les véhicules automobiles permet aux constructeurs de véhicules de proposer de nouvelles fonctionnalités.

De telles fonctionnalités peuvent par exemple être liées au contrôle du fonctionnement des organes fonctionnels du véhicule pour assurer par exemple une réduction du niveau des rejets polluants liés au fonctionnement des moyens de motorisation du véhicule ou une aide à la mise en oeuvre de certains de ces organes. Un système selon le préambule de la revendication 1 est connu du GB 2 305 262 A.

Le but de l'invention est de proposer un tel système.

A cet effet, l'invention a pour objet un système de contrôle à distance du fonctionnement d'au moins un organe fonctionnel d'un véhicule automobile, caractérisé en ce qu'il comporte une infrastructure de télécommunication comprenant des moyens d'échange d'informations par voie radioélectrique avec des moyens complémentaires embarqués à bord du véhicule, pour engendrer et émettre à destination de ceux-ci, des informations de contrôle du fonctionnement de l'organe fonctionnel à travers un réseau de transmission d'informations interne au véhicule, auquel est raccordé l'organe fonctionnel, pour permettre un contrôle du fonctionnement de cet organe, et en ce que l'organe fonctionnel est un calculateur de contrôle du fonctionnement des moyens de motorisation du véhicule et en ce que l'infrastructure de télécommunication comporte des moyens d'acquisition d'informations relatives au niveau de pollution dans l'environnement du véhicule, des moyens de détermination à partir de ce niveau de pollution, d'informations de contrôle du fonctionnement des moyens de motorisation du véhicule, pour limiter les rejets polluants de celui-ci et des moyens d'émission de ces informations en direction du véhicule afin de permettre un contrôle du fonctionnement des moyens de motorisation de celui-ci par le calculateur et donc des rejets polluants correspondants.

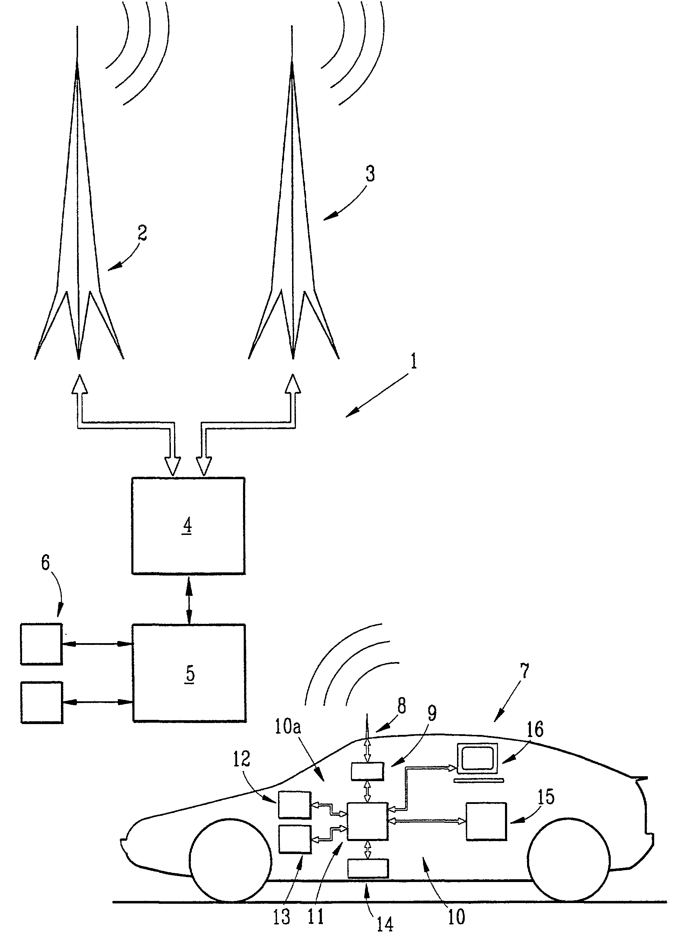

L'invention sera mieux comprise à la lecture de la description qui va suivre, donnée uniquement à titre d'exemple et faite en se référant au dessin annexé, qui représente un schéma synoptique illustrant la structure générale d'un système de contrôle selon l'invention.

De façon générale, un tel système de contrôle à distance du fonctionnement d'au moins un organe fonctionnel d'un véhicule automobile, comporte une infrastructure de télécommunication qui est désignée par la référence générale 1 sur cette figure.

Cette infrastructure comporte des moyens d'échange d'informations par voie radioélectrique avec des moyens complémentaires embarqués à bord du véhicule.

Ces moyens d'échange comprennent par exemple des stations d'émission/réception d'informations par voie radioélectrique, réparties le long d'un réseau routier pour couvrir une zone géographique donnée.

Ces stations sont par exemple associées à des pylônes, tels que les pylônes 2 et 3 représentés sur cette figure, sur lesquels sont disposées par exemple des antennes.

Celles-ci sont alors reliées à des moyens d'émission/réception d'informations désignés par la référence générale 4, associés à un système informatique désigné par la référence générale 5, lui-même relié à différents capteurs désignés par la référence générale 6.

Cette structure sera décrite plus en détail par la suite.

Ces moyens sont donc adaptés pour échanger des informations avec des moyens complémentaires embarqués à bord d'un véhicule automobile, circulant dans la zone couverte par cette infrastructure, le véhicule étant désigné par la référence générale 7 sur cette figure et comportant par exemple une antenne désignée par la référence générale 8, associée à des moyens d'émission/réception d'informations désignés par la référence générale 9, reliés à un système électronique embarqué à bord du véhicule, désigné par la référence générale 10 et comprenant un réseau 10a de transmission d'informations auquel sont raccordés tous les organes électroniques du véhicule.

Ce système comporte par exemple une unité centrale de traitement d'informations, désignée par la référence générale 11, de contrôle du fonctionnement de différents organes fonctionnels du véhicule, tels que par exemple les organes désignés par les références générales 12, 13, 14 et 15.

Des moyens d'acquisition d'informations sont également prévus, ces moyens étant désignés par la référence générale 16.

Ces différents moyens seront également décrits plus en détail par la suite.

L'infrastructure de télécommunication comporte donc des moyens d'échange d'informations par voie radioélectrique avec ces moyens complémentaires embarqués à bord du véhicule pour engendrer et émettre à destination de ceux-ci, des informations de contrôle du fonctionnement d'un organe fonctionnel du véhicule, à travers le réseau de transmission d'informations interne au véhicule, auquel est raccordé l'organe fonctionnel, pour permettre un contrôle du fonctionnement de cet organe.

Les moyens d'échange d'informations et les moyens complémentaires peuvent être formés par un système de radiotéléphone assurant un échange bidirectionnel d'informations entre l'infrastructure et le véhicule.

Le réseau interne du véhicule peut être un réseau multiplexé de type classique.

On conçoit alors qu'une telle structure permet d'assurer une configuration à distance de l'équipement électronique embarqué à bord du véhicule, cette configuration à distance pouvant se faire automatiquement en fonction des besoins du gestionnaire de l'infrastructure ou à la demande de l'utilisateur d'un véhicule pour la programmation de systèmes électroniques complexes embarqués à bord du véhicule.

Ainsi par exemple, l'organe fonctionnel peut être formé par un calculateur de contrôle du fonctionnement des moyens de motorisation du véhicule et l'infrastructure peut alors comporter des moyens d'acquisition d'informations relatives au niveau de pollution dans l'environnement du véhicule, des moyens de détermination à partir de ce niveau de pollution, d'informations de contrôle du fonctionnement des moyens de motorisation du véhicule, pour limiter les rejets polluants de ceux-ci et des moyens d'émission de ces informations en direction du véhicule, afin de permettre un contrôle du fonctionnement des moyens de motorisation de ce véhicule et donc des rejets polluants correspondants.

Ce contrôle peut par exemple correspondre à une vitesse limite autorisée de déplacement du véhicule, etc.

Dans ce cas, l'un des capteurs 6 décrits précédemment peut être un capteur de niveau de pollution dont la sortie est utilisée par le système informatique 5 de l'infrastructure de télécommunication pour élaborer des informations de contrôle qui sont transmises via les moyens d'émission/réception 4 aux antennes disposées sur les pylônes 2 et 3, pour être émises à destination de l'antenne correspondante 8 d'un véhicule.

Ces informations sont alors acquises à travers les moyens d'émission/réception correspondants 9 du véhicule pour permettre à l'unité centrale de traitement d'informations 11 de délivrer des informations de contrôle correspondantes au calculateur de contrôle du fonctionnement des moyens de motorisation du véhicule, formés par exemple par l'organe 12 décrit précédemment.

On conçoit alors qu'une telle structure permet d'apporter une réponse pertinente aux problèmes de trafic et de pollution rencontrés par exemple dans les grandes agglomérations.

Une autre application d'un tel système peut être envisagée, cette application correspondant à une aide à l'utilisation de certains équipements électroniques complexes embarqués à bord d'un véhicule, comme par exemple les systèmes d'aide à la navigation.

On sait en effet que l'entrée dans un tel système, d'informations relatives aux points d'origine et de destination du véhicule, est une opération relativement complexe et ce d'autant plus que l'utilisateur peut ne pas connaître les coordonnées exactes de son point de destination.

En utilisant le système décrit précédemment, l'utilisateur peut alors interroger l'infrastructure pour lui demander de programmer à sa place le système de navigation.

A cet effet, il émet une requête à partir du véhicule, grâce aux moyens d'acquisition d'informations 16, à l'unité centrale de traitement d'informations 11 aux moyens d'émission/réception correspondants 9 et à l'antenne 8, pour permettre à l'infrastructure de télécommunication 1 de recevoir la requête correspondante à travers les antennes des pylônes 2 et 3, les moyens d'émission/réception 4 et permettre ainsi au système informatique 5 de générer des informations de réponses correspondantes pour les réémettre à destination du véhicule de façon analogue à ce qui a été décrit précédemment.

Il va de soi bien entendu que d'autres fonctionnalités encore peuvent être envisagées et que la plupart des organes fonctionnels du véhicule peuvent ainsi être contrôlés à distance.

## Revendications

1. Système de contrôle à distance du fonctionnement d'au moins un organe fonctionnel d'un véhicule automobile, comportant une infrastructure de télécommunication (1) comprenant des moyens (2,3,4,5) d'échange d'informations par voie radioélectrique avec des moyens complémentaires (8,9,10,11) embarqués à bord du véhicule (7), pour engendrer et émettre à destination de ceux-ci, des informations de contrôle du fonctionnement de l'organe fonctionnel (12,12,14,15) à travers un réseau (10a) de transmission d'informations interne au véhicule, auquel est raccordé l'organe fonctionnel, pour permettre un contrôle du fonctionnement de cet organe, **caractérisé en ce que** l'organe fonctionnel est un calculateur (12) de contrôle du fonctionnement des moyens de motorisation du véhicule et **en ce que** l'infrastructure de télécommunication (1) comporte des moyens (6) d'acquisition d'informations relatives au niveau de pollution dans l'environnement du véhicule, des moyens (5) de détermination à partir de ce niveau de pollution, d'informations de contrôle du fonctionnement des moyens de motorisation du véhicule, pour limiter les rejets polluants de celui-ci et des moyens (2,3,4) d'émission de ces informations en direction du véhicule afin de permettre un contrôle du fonctionnement des moyens de motorisation de celui-ci par le calculateur et donc des rejets polluants correspondants.

2. Système selon la revendication 1, **caractérisé en ce que** les moyens d'échange d'informations et les moyens complémentaires sont formés par un système de radiotéléphone.

3. Système selon la revendication 1 ou 2, **caractérisé en ce que** le réseau interne au véhicule est un réseau multiplexé (10a) associé à une unité centrale de traitement d'informations (11).

4. Système selon l'une quelconque des revendications précédentes, **caractérisé en ce que** l'infrastructure de télécommunication comporte des moyens (2,3,4) d'acquisition d'informations concernant une requête émise à partir du véhicule pour le contrôle du fonctionnement de l'organe, des moyens (5) de génération des informations de réponses correspondantes et des moyens (2,3,4) d'émission de ces informations à destination du véhicule pour permettre un contrôle de l'organe fonctionnel.

5. Système selon la revendication 4, **caractérisé en ce que** l'organe est un système d'aide à la navigation du véhicule.

## Patentansprüche

1. Fernsteuerungssystem zum Betrieb wenigstens eines Funktionselements eines Kraftfahrzeugs, mit einer Telekommunikationsinfrastruktur (1), Mitteln (2, 3, 4, 5) zum Austausch von Information auf radioelektrischem Wege mit komplementären Mitteln (8, 9, 10, 11), die an Bord des Fahrzeugs (7) installiert sind, um Informationen zur Steuerung der Funktion des Funktionselements (12, 12, 14, 15) zu erzeugen und über ein internes Datenübertragungsnetz (10a) des Fahrzeugs, an welches das Funktionselement angeschlossen ist, an diese komplementären Mittel zu senden, um eine Steuerung der Funktion dieses Elements zu ermöglichen, **dadurch gekennzeichnet daß** das Funktionselement ein Steuerrechner (12) für den Betrieb von Antriebseinrichtungen des Fahrzeugs ist und daß die Telekommunikationsinfrastruktur (1) Mittel (6) zum Erfassen von Informationen über das Ausmaß der Umweltverschmutzung in der Umgebung des Fahrzeugs, Mittel (5) zur Bestimmung von Informationen zur Funktionssteuerung der Antriebseinrichtung des Fahrzeugs anhand des Ausmaßes der Umweltverschmutzung und Mittel (2, 3, 4) zum Senden dieser Informationen an das Fahrzeug aufweist, um eine Funktionssteuerung der Antriebseinrichtung desselben durch den Rechner und damit eine Steuerung der entsprechenden Schadstoffemission zu ermöglichen.

2. System nach Anspruch 1, **dadurch gekennzeichnet, daß** die Informationsaustauschmittel und die komplementären Mittel durch ein Funktelefonsystem gebildet werden.

3. System nach Anspruch 1 oder 2, **dadurch gekennzeichnet, daß** das interne Netz des Fahrzeugs ein Multiplex-Netz (10a) ist, das mit einer zentralen Datenverarbeitungseinheit (11) verbunden ist.

4. System nach einem der vorstehenden Ansprüche, **dadurch gekennzeichnet, daß** die Telekommunikationsinfrastruktur Mittel (2, 3, 4) zum Erfassen von Informationen bezüglich einer vom Fahrzeug aus gesendeten Anfrage zur Funktionssteuerung des Elements, Mittel (5) zur Erzeugung von entsprechenden Antwortinformationen und Mittel (2, 3, 4) zum Senden dieser Informationen zum Fahrzeug aufweist, um eine Steuerung des Funktionselements zu ermöglichen.

5. System nach Anspruch 4, **dadurch gekennzeichnet, daß** das Funktionselement ein Navigationssystem des Fahrzeugs ist.

## Claims

1. Remote control system for operating at least one functional element of a vehicle, comprising a telecommunication infrastructure (1), including means (2, 3, 4, 5) for exchanging information via a radio, with complementary means (8, 9, 10, 11) fitted on board the vehicle (7) to generate and transmit information for controlling the operation of the functional element (12, 12, 14, 15) across an internal network (10a), linked to the functional element, which transmits information, and to allow the operation of this element to be controlled, **characterised in that** the functional element is a computer (12) that controls the operation of the vehicle's motorisation means and **in that** the telecommunication infrastructure (1) comprises means (6) for acquiring information relating to the level of pollution in the vehicle environment, means (5) for determining, from this level of pollution, the information for controlling the operation of the motorisation means of the vehicle, to limit the pollutants of the latter and means (2, 3, 4) for transmitting this information to the vehicle so as to allow the operation of the motorisation means of the vehicle, and thus the corresponding pollutants,
to be controlled by the computer.

2. System according to claim 1, **characterised in that** the means for exchanging information and the complementary means consist of a radiotelephone system.

3. System according to claim 1 or 2, **characterised in that** the internal network of the vehicle is a multiplex network (10a) linked to a central information processing unit (11).

4. System according to any of the preceding claims, **characterised in that** the telecommunication infrastructure comprises means (2, 3, 4) for acquiring information concerning a request transmitted from the vehicle for controlling the operation of the element, means (5) for generating the information for the corresponding response and means (2, 3, 4) for transmitting this information to the vehicle to allow control of the functional element.

5. System according to claim 4 **characterised in that** the element is a navigational aid system for the vehicle.
